# EUROPÄISCHE PATENTSCHRIFT

(11) **EP 3 687 774 B1**
(45) Veröffentlichungstag und Bekanntmachung des Hinweises auf die Patenterteilung: **07.04.2021**
(21) Anmeldenummer: 18780058.6
(22) Anmeldetag: 25.09.2018
(51) Int. Cl.: B29C 65/16, D21F 7/10, D21F 1/00, B29C 65/48, B29C 65/50, B29C 65/82, B29K 507/04, B30B 9/24, B29L 31/00, B29C 65/00

(54) **ENDLOSGEWEBEBÄNDER**
ENDLESS FABRIC BELTS
BANDES DE TISSU SANS FIN

(30) Priorität: 27.09.2017 US 201762563723 P
(43) Veröffentlichungstag der Anmeldung: 05.08.2020
(73) Patentinhaber: Voith Patent GmbH, 89522 Heidenheim (DE)
(72) Erfinder: MALMQUIST, Johan, 64136 Katrineholm (SE); EBERHARDT, Robert, 73479 Ellwangen (DE); KLASCHKA, Susanne, 50937 Köln (DE); WICH, Torsten, Appleton, WI 54914 (US)
(86) Internationale Anmeldenummer: PCT/EP2018/075894
(87) Internationale Veröffentlichungsnummer: WO 2019/063518

(56) Entgegenhaltungen:
- DE-A1-102012 207 016
- DE-U1-202012 100 695
- US-A1- 2007 028 997

## Beschreibung

Die Erfindung betrifft eine Bespannung zum Einsatz in einer Maschine zur Herstellung einer Faserstoffbahn gemäß dem Oberbegriff des Anspruchs 1

Bespannungen, insbesondere Bespannungen für Papiermaschinen umfassen häufig als Bestandteil eines oder mehrere Gewebebänder. Sind Einsatz in einer Bespannung werden üblicherweise endlose Gewebebänder, sogenannte Bandschlaufen benötig. Diese können entweder direkt als Bandschlaufe gewebt sein oder sie können als flaches gewebt sein, welches durch Verbinden der beiden längsseitigen Enden endlos gemacht wird.

Für eine solche Verbindung zweier Enden eines Gewebebandes sind aus dem Stand der Technik verschiedene Möglichkeiten bekannt.

So beschreibt die US 2014/0186579 das Verbinden zweier Enden mittels einer Ultraschall-Schweißnaht.

Diese Art der Verbindung ist jedoch nachteilig. Einerseits leidet, wie auch in den Figuren der US 2014/0186579 erkennbar, das Gewebe beim Verschweiß Prozess. Die Eigenschaften der Fügestelle nach dem Verschweißen sind ohne weiteres nicht vorhersagbar. Auch leiden die Festigkeitseigenschaften der verschweißten Filamente. Dies ist besonders nachteilig, da eine ausreichende Zugfestigkeit insbesondere in Maschinenrichtung, ein wichtiges Qualitätsmerkmal des Grundgewebes, sowie der fertigen Bespannung darstellt.

Schließlich sind derartige Schweißverbindungen auch vergleichsweise brüchig.

Auch in der US 7,381,307 wird eine Schweißverbindung zweier Gewebeenden vorgeschlagen. Die US 7,381,307 lässt sich nicht sehr detailliert über Verschweißung der Enden aus, schlägt aber generell das Laserschweißen als geeignete Verbindungsart vor.

Auch in den Schriften DE 10 2012 207016 A1, US 2007/028997 A1 sowie DE 20 2012 100695 U1 werden Schweißverbindungen in Bespannungen beschrieben.

Während es zwar prinzipiell durch das Laserschweißen möglich ist, einige der Nachteile des Ultraschall-Schweißens zu vermeiden, kann für einen erfolgreichen Einsatz einer solchen Verbindung nicht jedes beliebige Laserschweißverfahren eingesetzt werden.
Zum einen muss wieder sichergestellt werden, dass die Festigkeit der verschweißten Fäden durch das Verschweißen nicht zu stark reduziert wird. Die beim Laserschweißen entstehende Hitze reduziert Festigkeit der Fäden, wenn sich diese zu stark erhitzen.
Trotzdem muss natürlich sichergestellt sein, dass die Fügestelle die notwendige Festigkeit aufweist.
Zudem sollte die Fügestelle auch nicht zu aufwändig in der Herstellung sein, da dies den Aufwand für die Herstellung der Bespannung erhöht.
Diese Aufgabenstellungen sind in gewisser Weise gegenläufig.

Aufgabe der vorliegenden Erfindung ist es, die aus dem Stand der Technik bekannten Bespannungen, insbesondere hinsichtlich ihrer Fügestellen zu verbessern.
Es ist eine weitere Aufgabe der vorliegenden Erfindung, eine Bespannung mit einer Fügestelle vorzuschlagen, bei der die Eigenschaften der Fügestelle bzw. Verbindungsstelle bereits vor dem Fügen vorhersagbar bzw. einstellbar sind.
Es ist weiterhin eine Aufgabe der Erfindung eine Bespannung mit einer Fügestelle bzw. Verbindungsstelle vorzuschlagen, bei der die Verbindung eine ausreichende Festigkeit aufweist. Zudem ist eine weitere Aufgabe der Erfindung, dass die verschweißten Filamente, insbesondere die in Maschinenlängsrichtung angeordneten Filamente, auch nach dem Fügen noch eine ausreichende Festigkeit aufweisen.
Eine weitere Aufgabe, die durch die Erfindung gelöst werden soll ist es, eine Bespannung mit einer Fügestelle vorzuschlagen, wobei die Verbindung einfach herzustellen ist.

Diese Aufgaben werden vollständig gelöst durch eine Bespannung für eine Maschine zur Herstellung einer Faserstoffbahn gemäß dem Kennzeichen des Anspruchs 1.

Es wird eine Bespannung, insbesondere Pressfilz zum Einsatz in einer Maschine zur Herstellung einer Faserstoffbahn vorgeschlagen. Die Bespannung umfasst ein Gewebeband mit miteinander verwobenen Längsfäden und Querfäden sowie mit einem ersten und einem zweiten längsseitigen Ende wobei die beiden längsseitigen Enden des Gewebebandes in einer Verbindungszone miteinander verbunden sind. Dabei ist erfindungsgemäß vorgesehen, dass die beiden längsseitigen Enden mittels Transmissionsschweißen, insbesondere mittels Lasertransmissionsschweißen miteinander verschweißt sind.

Lasertransmissionsschweißen wird auch Laserdurchstrahlschweißen genannt.
Der transparente Fügepartner wird dabei vom Laserstrahl ohne nennenswerte Erwärmung durchstrahlt. Erst im zweiten Fügepartner wird der Laserstrahl in einer oberflächennahen Schicht absorbiert, wobei die Laserenergie in Wärmeenergie umgewandelt und der Kunststoff aufgeschmolzen wird. Durch Wärmeleitung wird dann auch der transparente Fügepartner an der Oberfläche erwärmt.
Die Erfindung ist jedoch nicht auf Lasertransmissionsschweißen beschränkt. So ist es prinzipiell auch vorstellbar, dass statt eines Lasers eine andere Quelle zur Erzeugung des Lichtstrahls verwendet wird.
Ein Fügepartner sei im Folgenden für Licht eines Wellenlängenbereiches als "absorbierend" oder "in weiten Teilen absorbierend" bezeichnet, wenn er mehr als 50%, insbesondere mehr als 80% des eingestrahlten Lichts absorbiert.
Ein Fügepartner sei im Folgenden für Licht eines Wellenlängenbereiches als "transparent" oder "weitgehend transparent" bezeichnet, wenn mehr als 50%, insbesondere mehr als 80% des eingestrahlten Lichts diesen Fügepartner durchstrahlt.

Vorteilhafte Ausführungen der Erfindung werden in den Unteransprüchen beschrieben.

Als Gewebeband können verschiedenartigste Arten von Geweben verwendet werden. Insbesondere kann es sich um einlagige, zweilagige, aber auch um mehrlagige Gewebe handeln.

Es kann auch vorteilhafterweise vorgesehen sein, dass die Bespannung mehr als ein Gewebeband umfasst, z.B. ein zweites oder drittes Gewebeband.

Dabei können die Enden der weiteren Gewebebänder analog dem ersten Gewebeband mittels Transmissionsschweißen verbunden sein. Einige oder alle er weiteren Gewebebänder können jedoch auch andere Verbindungsstrukturen aufweisen. Insbesondere kann es sich bei einem oder mehreren der weiteren Gewebebänder um Endlosgewebe handeln.

In einer vorteilhaften Ausführung der Erfindung kann zumindest ein Verbindungselement vorgesehen sein, welches mit zumindest einigen der Längsfäden zumindest eines längsseitigen Endes, insbesondere beider längsseitiger Enden mittels Transmissionsschweißen, insbesondere mittels Lasertransmissionsschweißen verbunden ist.

Dieses Verbindungselement, bzw. diese Verbindungselemente werden mit dem Gewebeband lediglich durch die Schweißverbindung verbunden sein.

In einer sehr bevorzugten Ausführung kann die Bespannung ein Gewebeband mit einem ersten und einem zweiten längsseitigen Ende und zumindest ein Verbindungselement umfassen, wobei die beiden längsseitigen Enden des Gewebebandes mittels des zumindest einen Verbindungselements in einer Verbindungszone miteinander verbunden sind.

Dabei kann vorgesehen sein, dass die Verbindungszone derart ausgebildet ist, dass an zumindest einem, insbesondere beiden längsseitigen Enden des Gewebebandes ein oder mehrere Querfäden unter Ausbildung freier Enden der Längsfäden entfernt sind.

Weiterhin kann das zumindest eine Verbindungselement mit zumindest einigen der freien Enden beider längsseitigen Enden mittels Transmissionsschweißen, insbesondere mittels Lasertransmissionsschweißen verschweißt sein. Die Kraftübertragung zwischen den beiden längsseitigen Enden erfolgt dabei lediglich über das bzw. die Verbindungselemente.
Insbesondere kann vorgesehen sein, dass die freien Enden der Längsfäden in einer solchen Ausführung nicht direkt miteinander verschweißt sind. Die freien Enden sind dann ledigliche mit einem oder mehreren Verbindungselementen verschweißt.

Vorteilhafterweise kann vorgesehen sein, dass die freien Enden durch Entfernen von einem, zwei, drei, vier, fünf oder mehr Querfäden, insbesondere 10 oder mehr Querfäden entstanden sind.

In besonders vorteilhaften Ausführungen kann vorgesehen sein, dass das zumindest eine Verbindungselement, insbesondere alle Verbindungselemente, zumindest einen Faden oder ein Bändchen umfasst oder daraus besteht, welcher bzw. welches im Wesentlichen in Querrichtung des Gewebebands orientiert ist.

Es können dabei alle bekannten Arten von Fäden eingesetzt werden, wie zum Beispiel Monofilament, also Garne aus einem einzigen Filament, oder auch Multifilamente. Diese können gezwirnt oder ungezwirnt sein.

Dabei kann beispielsweise vorgesehen sein, dass das zumindest eine Verbindungselement bzw. alle Verbindungselemente aus einem Faden bestehen, der in wesentlichen Eigenschaften wie z.B. Durchmesser und/oder Biegesteifigkeit den übrigen Querfäden des Gewebebandes entspricht.

Insbesondere kann das Verbindungselement, beispielsweise der Faden, weitgehend auch aus demselben Material, insbesondere demselben Polymermaterial, bestehen, wie die übrigen Querfäden. Der Begriff 'weitgehend' soll dabei die Möglichkeit erlauben, dass dem Material des Verbindungselement gegebenenfalls Zusatzstoffe wie z.B. Farbstoffe beigemischt sein können, die allerdings weniger als 30 Gew-%, insbesondere weniger als 10 Gew-% ausmachen.

Bei einem Bändchen kann es sich beispielsweise um ein Band mit einer Breite von weniger als 50mm, 30 mm, 20mm, 10mm oder 5mm handeln.
Es kann sich vorzugsweise um ein textiles Bändchen, insbesondere Gewebebändchen handeln, um eine Folie - mit oder ohne Perforation -, eine Polymermatrix mit oder ohne Verstärkungselementen. Alternativ sind aber auch andere Arten von Bändchen möglich.

Weiter können vorteilhafterweise mehr als ein Verbindungselement, insbesondere zwei, drei oder mehr Verbindungselemente vorgesehen sein.
Da die Kraftübertragung zwischen den beiden längsseitigen Enden ausschließlich über die Verbindungselemente erfolgt, kann durch zusätzliche Verbindungselemente die Festigkeit der Verbindung gesteigert werden.

In weiteren, bevorzugten Ausführungen kann vorgesehen sein, dass weniger als 10 Verbindungselemente, insbesondere 5 Verbindungselemente oder weniger vorgesehen sind. Durch eine geringere Anzahl von Verbindungselementen wird der Aufwand bei der Herstellung mittels Transmissionsschweißens reduziert.
Ganz besonders vorteilhaft ist es, wenn die Anzahl und/oder die Positionierung der Verbindungselemente so gewählt sind, dass das Verschweißen in einem einzigen Schweißvorgang bewerkstelligt werden kann. Dies ist insbesondere dann möglich, wenn die Anzahl der Verbindungselemente nicht zu groß ist, insbesondere kleiner als 10.

Der große Vorteil bei der Verwendung des Transmissionsschweißens besteht darin, dass die Materialien des Gewebebandes sowie des oder der Verbindungselemente aufeinander und auf das verwendete Licht, bzw. den verwendeten Laser abgestimmt werden können. Insbesondere können die Materialien so gewählt sein, dass zumindest die Längsfäden des Gewebebandes für das eingesetzte (Laser-)licht weitgehend transparent sind, während das oder die Verbindungselemente das (Laser-)licht ganz oder zumindest zu 50% insbesondere zumindest zu 80% absorbieren.

Dies hat den großen Vorteil, dass sich beim Verschweißen hauptsächlich die Verbindungselemente durch die Absorption des Lichts aufheizen, während sich die Längsfäden beim Verschweißen nicht gänzlich aufheizen, sondern nur an der Oberfläche, an der sie mit den Verbindungselementen in Kontakt stehen, bzw. verbunden sind. Eine Schädigung der Festigkeitseigenschaften der Längsfäden wird dadurch weitgehend vermieden. Eine mögliche Schädigung der Verbindungselemente durch das Aufheizen ist weniger kritisch. Sollte sich dadurch die Gesamtfestigkeit der Verbindung bzw. der gesamten Bespannung unterhalb einer Toleranzschwelle verringern, so lässt sich dies durch Hinzunahme eines weiteren Verbindungselements auf einfache Art beheben.

Durch den beschriebenen Effekt, dass nämlich das Material der transparenten Fäden, also üblicherweise der Längsfäden, nicht beim Verschweißen durcherhitzt worden ist, lässt sich die Verwendung des Transmissionsschweißens in der Bespannung nachweisen.

Dabei kann entweder vorgesehen sein, dass die Verbindungselemente bereits beim Herstellungsprozess des Gewebebandes mit eingewoben worden sind. Dies kann unter anderem dann vorteilhaft sein, wenn es sich bei den Verbindungselementen um Fäden handelt.

In anderen Ausführungen kann vorgesehen sein, dass das Verbindungselement nachträglich mit freien Enden der Längsfäden verwoben oder vernäht worden ist. Dies kann beispielsweise bei der Verwendung von Bändchen als Verbindungselemente vorteilhaft sein.

Beide Arten können auch miteinander kombiniert sein.

Weiterhin ist vorgesehen, dass die Verbindungselemente mit dem Gewebeband im Allgemeinen bzw. den Längsfäden im Besonderen lediglich durch die Schweißverbindung verbunden ist. Insbesondere ist vorgesehen, dass die Verbindungselemente nicht mit den Längsfäden verwoben oder vernäht sind. Besonders vorteilhafterweise können die Verbindungselemente lediglich auf die Längsfäden bzw. die freien Enden der Längsfäden aufgelegt und mit allen oder einigen davon verschweißt sein.

Eine derartige Verbindung ist insbesondere deshalb vorteilhaft, weil die Verbindung der längsseitigen Enden sehr schnell erfolgen kann. Der Aufwand für das Verweben oder Vernähen der Verbindungselemente ist dabei vergleichsweise groß.

Dabei kann vorgesehen sein, dass sowohl auf einer Oberseite als auch auf einer Unterseite der Verbindungszone Verbindungselemente angeordnet sind oder dass alle Verbindungselemente auf einer Seite der Verbindungszone angeordnet sind.

Bei einer Anordnung aller Verbindungselemente auf einer Seite der Verbindungszone kann die Verbindung sehr einfach hergestellt werden. Eine Anordnung der Verbindungselemente auf der Oberseite und der Unterseite kann in bestimmten Anwendungen die Gleichförmigkeit der Verbindungszone vergrößern.

In weiteren sehr vorteilhaften Ausführungen der Bespannung kann vorgesehen sein, dass die freien Enden der Längsfäden im Bereich der Verbindungszone ineinandergreifen.

Insbesondere kann auch vorgesehen sein, dass die freien Enden der Längsfäden eines oder beider längsseitigen Enden unterschiedlich lang sind.
Auf diese Weise kann in der Verbindungszone die Dichte der Längsfäden reduziert werden, und trotzdem noch eine einfache Verbindung der längsseitigen Enden erzielt werden.

Sind alle freien Enden nämlich auf beiden Seiten gleich lang, und greifen diese Enden in der Verbindungszone ineinander, so weist die Verbindungszone-zumindest bereichsweise- die doppelte Anzahl von Längsfäden pro Längeneinheit, also die doppelte Längsfadendichte auf, verglichen mit einem Gewebebereich außerhalb der Verbindungszone. Mit dieser Ausführung kann eine besonders hohe Festigkeit der Verbindung erzielt werden. Allerdings wird sich bei derartigen Ausführunge der Verbindungsbereich häufig in andern Eigenschaften, z.B. der Durchlässigkeit für Luft und/oder Wasser merklich von den Bereichen außerhalb der Verbindungszone unterscheiden.
Die Längsfadendichte in der Verbindungszone kann dabei vorteilhafterweise zwischen der Längsfadendichte außerhalb der Verbindungszone und der doppelten Längsfadendichte außerhalb der Verbindungszone liegen. Es kann alternativ auch vorgesehen sein, dass die Längsfadendichte in der Verbindungszone unterhalb der Längsfadendichte in der übrigen Bespannung, z.B. bei 90% liegt.
Besonders vorteilhaft kann vorgesehen sein, dass in der Verbindungszone die Dichte der Längsfäden die gleiche ist, wie außerhalb der Verbindungszone. Alternativ kann sich die Dichte der Längsfäden in der Verbindungszone auch um bis zu 10%, 25%, 30%, 50%, 75% oder auch mehr von der Dichte der Längsfäden außerhalb der Verbindungszone unterscheiden.

Dies kann beispielsweise so realisiert sein, dass an beiden längsseitigen Enden jedes zweite freie Ende der Längsfäden entfernt, oder zumindest teilweise entfernt ist, so dass Lücken entstehen. Dann können die längsseitigen Enden so angeordnet sein, dass die übrigen freien Enden der einen Seite in den Lücken der anderen Seite positioniert sind. Eine derartige Anordnung sei nur beispielhaft als eine von vielen Möglichkeiten angeführt, durch unterschiedlich lange freie Enden die Längsfadendichte in der Verbindungszone auf dieselbe Dichte wie außerhalb der Verbindungszone zu bringen. Der Fachmann wird ohne weiteres Zutun eine Vielzahl von möglichen Kombinationen von Längen der freien Enden und Positionierungen finden, die denselben Effekt erzielen. Dabei können die freien Enden z.B. auch nicht nur, wie im Beispiel beschrieben, zwei verschiedene Längen aufweisen, sondern auch drei, vier oder mehr.
Ein derartiges Ausdünnen der freien Enden unterstützt die vorteilhafte Eigenschaft der Erfindung, dass die Eigenschaften der Verbindungsstelle bereits vor dem Fügen vorhersagbar bzw. einstellbar sind.
Ein weiterer Vorteil ist es, dass auch die Ausdehnung der Verbindungszone in Längsrichtung der Bespannung angepasst werden kann. So kann beim Design der Bespannung beispielsweise festgelegt werden, ob eine breite Verbindungszone von z.B. 5mm oder mehr, insbesondere 10mm, 20mm oder 30mm vorgesehen ist. In diesem Fall können, z.B. durch Reduzierung der Längsfadendichte, Eigenschaften der Verbindungszone wie die Permeabilität oder Dicke den Eigenschaften außerhalb der Verbindungszone weitgehend angeglichen werden, so dass sie insbesondere im Bereich zwischen 80% und 120% der entsprechenden Werte außerhalb der Verbindungszone liegen.
Die benötigte Festigkeit der Verbindung kann dann z.B. durch die Breite der Verbindung gewährleistet werden.
Alternativ kann aber auch eine schmale Verbindungszone von weniger als 5mm Ausdehnung, z.B. 3mm oder 2mm vorgesehen sein. In einer derart schmalen Verbindungszone können oftmals auch größere Abweichung in der Permeabilität oder ähnlichen Eigenschaften toleriert werden. So kann in diesem Fall z.B. die Permeabilität der Verbindungszone mehr als 30%, 50% oder auch mehr als 100% von der Permeabilität des übrigen Gewebebandes abweichen. Daher kann es hier vorteilhaft sein, zur Gewährleistung der benötigten Festigkeit eine höhere Längsfadendichte in der Verbindungszone vorzusehen, z.B. die doppelte Längsfadendichte verglichen mit einem Bereich außerhalb der Verbindungszone.

In einer weiteren vorteilhaften Ausführung kann vorgesehen sein, dass zumindest ein Verbindungselement nur mit einem Teil der Längsfäden insbesondere mit weniger als 75% oder weniger als 50% der Längsfäden jedes längsseitigen Endes, in Kontakt steht oder verschweißt ist.

Weiterhin kann in der Bespannung vorgesehen sein, dass zumindest ein Verbindungselement -vorzugsweise alle Verbindungselemente- zumindest an einer Oberfläche ein Material aufweist, welches Licht aus einem Wellenlängenbereich zwischen 780nm und 1100nm, insbesondere zwischen 800nm und 1000nm absorbiert.

Die Verwendung eines derartigen absorbierenden Materials ist deshalb vorteilhaft, da nahezu alle naturfarbenen und unverstärkten Thermoplaste in diesem Wellenlängenbereich einen hohen Transmissionsgrad aufweisen. Dadurch eignen sich diese Materialen sehr gut als transparente Fügepartner. Um jedoch ein Material wie z.B. Polyamid, Polyethylen oder ähnliches als absorbierenden Fügeparter beim Transmissionsschweißen einsetzen zu können, ist die Zugabe eines entsprechenden Absorbermaterials vorteilhaft.
Ein geeignetes Absorbermaterial kann beispielsweise Ruß sein, oder auch Graphit. Dem Fachmann sind jedoch auch andere geeignete Absorbermaterialien bekannt.. Das Absorbermaterial kann dabei beispielsweise auf die Oberfläche des Verbindungselements aufgebracht sein, oder in die Oberfläche, bzw. in die gesamte Masse des Verbindungselements eingebracht sein.

In einer weiteren vorteilhaften Ausführung kann vorgesehen sein, dass in das Gewebeband einer oder mehrere absorbierende Querfäden eingewebt sind, welche zumindest mit einigen der Längsfäden verschweißt sind.
Unter absorbierenden Querfäden sollen solche Querfäden verstanden werden, die zumindest an der Oberfläche ein Material aufweisen, welches Licht aus einem Wellenlängenbereich zwischen 780nm und 1100nm, insbesondere zwischen 800nm und 1000nm zumindest zu 50%, vorteilhafterweise zumindest zu 80%, idealerweise vollständig absorbiert.
Diese absorbierenden Querfäden unterscheiden sich von einem Verbindungselement auch dadurch, dass sie nur mit Längsfäden eines längsseitigen Endes in Kontakt stehen bzw. verschweißt sind. Die absorbierenden Querfäden sind außerhalb der Verbindungszone angeordnet. Vorteilhafterweise können aber zumindest einige dieser absorbiereden Querfäden - in Längsrichtung des Gewebebandes betrachtetdirekt an die Verbindungszone angrenzen bzw. einen Abstand von wenigen Millimeter - üblicherweise weniger als 100mm oder auch weniger als 20mm von der Verbindungszone aufweisen.

Besonders bevorzugt können diese absorbierenden Querfäden Licht derselben Wellenlänge absorbieren, wie eines oder mehrere der Verbindungselemente.

Die absorbierenden Querfäden können mit allen oder einigen der Längsfäden verschweißt sein - vorzugsweise mit demselben Schweißverfahren, wie die Verbindungselemente. Diese absorbierenden Querfäden dienen beispielsweise der Verhinderung von Laufmaschen im Gewebeband. Falls es im Bereich der Verbindungszone zu einem Defekt kommt, soll dieser sich nicht über das gesamte Gewebeband ausbreiten. Vorteilhaft ist daher, diese absorbierenden Querfäden in der Nähe der Verbindungszone, speziell als erste Querfäden, bzw. innerhalb der ersten 5 oder 10 Querfäden nach der Verbindungszone vorzusehen. Alternativ und/oder zusätzlich können verschweißte Fäden auch an anderen Stellen des Gewebebandes vorgesehen bzw. eingewoben sein.
Bei der Verwendung eines Transmissionsschweißens ist es auch vorteilhaft, zwei oder mehr benachbarte Querfäden als absorbierende Querfäden vorzusehen. Je nach verwendetem Webmuster kann so sichergestellt werden, dass jeder der (transparenten) Längsfäden einmal über dem absorbierenden Querfaden verläuft, was ein Transmissionsschweißen von einer Seite der Bespannung ermöglicht.

In einer sehr vorteilhaften Ausführung kann vorgesehen sein, dass die Festigkeit der verschweißten Längsfäden zumindest 60%, insbesondere zumindest 75% der Festigkeit der nicht verschweißten Längsfäden beträgt. Besonders vorteilhaft kann es sein, wenn die Festigkeit der verschweißten Längsfäden zumindest 80%, 85%, 90% oder 95% der Festigkeit der nicht verschweißten Längsfäden beträgt.

Zur Ermittlung der Festigkeit der Längsfäden können mehrere Methoden verwendet werden:
1.) Vergleich der Zugfestigkeiten: Aus einem Längsfaden der Bespannung werden zwei gleich lange Teile entnommen. Ein Teil aus einem längsseitigen Ende des Gewebebandes, an dem der Faden mit dem zumindest einen Verbindungselement verschweißt war, und ein anderer Teil aus einem entfernten Ende, welcher keine Schweißstellen aufweist. Für beide Teile wird die Zugfestigkeit ermittelt (siehe hierzu ASTM D 638 Standard Test Method for Tensile Properties of Plastic) und die erhaltenen Werte miteinander verglichen.
   1a) Diese Messung kann nach dem Verschweißen am noch nicht weiter verarbeiteten Gewebeband erfolgen
   1b) Diese Messung kann alternativ auch an Längsfäden einer fertigen Bespannung, und somit nach einer möglichen Vernadelung mit einer oder mehreren Vlieslagen erfolgen.
2.) Kraftmessung bei konstanter Dehnung: Wie unter 1.) beschrieben werden auch hier zwei Teile eines Längsfadens untersucht und miteinander verglichen. Für beide Teile wird jeweils ein Kraft-Dehnungs-Diagramm erstellt. Dabei wird die Kraft ermittelt, bei der sich der Fadenteil um 2% gedehnt hat. Diese Kraftwerte werden für beide Teile miteinander verglichen.
   2a) Diese Messung kann nach dem Verschweißen am noch nicht weiter verarbeiteten Gewebeband erfolgen
   2b) Diese Messung kann alternativ auch an Längsfäden einer fertigen Bespannung, und somit nach einer möglichen Vernadelung mit einer oder mehreren Vlieslagen erfolgen.

Das Kriterium, dass die Festigkeit der verschweißten Längsfäden zumindest 75% der Zugfestigkeit der nicht verschweißten Längsfäden beträgt soll dann erfüllt sein, wenn für zumindest einen der unter 1a), 1b), 2a) und 2b) beschriebenen Messwerte der Wert des verschweißten Längsfadens mindestens 75% des unverschweißten Teils beträgt.

Durch das verwendete Transmissionsschweißen, insbesondere Lasertransmissionsschweißen kann erreicht werden, dass die Schädigung der Längsfäden an der Schweißstelle durch das Schweißverfahren sehr gering ist. Insbesondere, wenn die Längsfäden, was generell sehr vorteilhaft sind, als transparenter Fügepartner gewählt ist. In diesem Fall heizen sich die Längsfäden beim Schweißen allenfalls an der Oberfläche auf. Ein Erhitzen des Inneren der Längsfäden, und damit eine mögliche Schwächung der Materialstruktur, werden dabei weitgehend vermieden. Auch die Kristalinität und die Orientierung der Molekülketten des transparenten Fügepartners bleiben weitgehen erhalten. Selbst die Geometrie der Längsfäden kann weitgehend erhalten.
Versuche der Anmelderin haben gezeigt, dass bei der aus dem Stand der Technik bekannten Technik des Ultraschall-Schweißens die Materialstruktur derart stark geschädigt wird, dass die Festigkeit der Längsfäden nach dem Verschweißen üblicherweise weniger als ein Drittel der Festigkeit im unverschweißten Zustand beträgt. Insbesondere werden die Längsfäden durch diese Schweißverfahren brüchig.

In einer weiteren sehr vorteilhaften Ausführung kann vorgesehen sein, die Festigkeit der Verbindungszone zumindest 25%, insbesondere zumindest 50% der Festigkeit der Festigkeit des übrigen Gewebebands beträgt.
Die Festigkeit der Verbindungszone wird dabei mit der Festigkeit des übrigen Gewebebands mit einem analogen Verfahren verglichen, wie es zur Bestimmung der Festigkeit der Längsfäden verwendet wurde. Man verwendet hierbei Stück eines Gewebebandes, das eine Verbindungszone umfasst und vergleicht es mit einem Stück desselben Gewebebandes, welches keine Verbindungszone umfasst.

Die Festigkeit der Verbindungszone und die Festigkeit der sind dabei durchaus unterschiedliche Eigenschaften.
Bei der Festigkeit eines Längsfadens spielen weitgehend nur die Materialeigenschaften und die Geometrie des Fadens eine Rolle.
Bei der Festigkeit der Verbindungszone spielen neben der Festigkeit der Längsfäden unter anderem auch die Festigkeit der Verbindungselemente sowie die Festigkeit der Fügeverbindung eine Rolle. Bei den aus dem Stand der Technik bekannten Bespannungen, wie z.B. bei Ultraschall-geschweißten Bespannungen, geht mit einer Steigerung der Festigkeit der Fügeverbindung die Reduzierung der Festigkeit der Längsfäden einher. Zudem werden die Verbindungen sehr schnell brüchig. Bei einer Bespannung gemäß einer bevorzugten Ausführung der vorliegenden Erfindung kann dies vermieden werden, und - insbesondere durch das Verwenden von Lasertransmissionsschweißen- es kann eine feste Fügeverbindung erziel werden, bei der die Längsfäden zum größten Teil ihre Festigkeit behalten. Die Verbindung ist zudem auch nicht so brüchig, wie beim Ultraschall-Schweißen.

In weiteren vorteilhaften Ausführungen kann vorgesehen sein, dass die Eigenschaften der Verbindungszone weitgehend denen des übrigen Gewebebandes entsprechen.
So kann beispielsweise die Verbindungszone eine Permeabilität aufweisen, die sich um weniger als 30%, weniger als 20% oder weniger als 10% von der Permeabilität des übrigen Gewebebands unterscheidet.
Alternativ oder zusätzlich kann die Verbindungszone eine Dicke aufweisen, die sich um weniger als 10% von der Dicke des übrigen Gewebebands unterscheidet.

In anderen vorteilhaften Ausführungen kann die Verbindungszone eine Permeabilität aufweisen, die sich um mehr als 10%, mehr als 30% oder als 50% von der Permeabilität des übrigen Gewebebands unterscheidet. Dies kann insbesondere vorteilhaft sein, wenn die Verbindungszone eine Breite von weniger als 5mm, insbesondere 3mm oder 2mm aufweist.
In vielen Anwendungen beeinflussen selbst derartige relativ großen lokalen Änderungen aufgrund der geringen Größe der Verbindungszone die Eigenschaften der fertigen Bespannungen nicht mehr, oder nur noch in sehr geringem Maße.

Es ist im Übrigen auch möglich, dass die Eigenschaften der Verbindungszone auch durch eine geeignete Wahl des oder der Verbindungselemente beeinflusst werden kann.
So kann beispielsweise vorgesehen sein, dass die Verbindungselemente in Form von Fäden ausgeführt sind, und diese Fäden in Durchmesser und Fadendichte den Querfäden des Gewebebandes entsprechen, oder nur weniger als 10% davon abweichen.
In anderen Ausführungen kann aber auch die Anzahl dieser Querfäden, also die Querfadendichte in der Verbindungszone erhöht oder erniedrigt werden.
Alternativ oder zusätzlich kann auch der Durchmesser dieser Fäden größer oder kleiner gewählt werden, als der Durchmesser der Querfäden ausserhalb der Verbindungsone.

In einer Ausführung der Bespannung kann zumindest ein Querfaden außerhalb der Verbindungszone, insbesondere ein erster Querfaden außerhalb der Verbindungszone mit den Längsfäden sowohl verwebt als auch verschweißt ist. Ein solcher Gewebefaden ist dann lediglich mit Längsfäden eines längsseitigen Endes des Gewebebandes verbunden. Er trägt damit nicht in erster Linie zur Festigkeit de Verbindung bei. Der Hauptvorteil eines solchen verschweißten Querfadens besteht darin, dass er im Falle eines Schadens in der Verbindungszone verhindert, dass sich der Schaden durch die gesamte Bespannung zieht und sich z.B. eine Laufmasche bildet. Vorteilhafterweise können diese Querfäden so ausgebildet sein, dass sie auch mittels Transmissionsschweißen mit den Längsfäden verschweißt werden können bzw. sind.

Bevorzugt kann es sich bei der Bespannung um einen Pressfilz handeln. Besonders bevorzugt umfasst die Bespannung eine oder mehrere Lagen Vliesmaterial.
Dieses Vliesmaterial kann durch Vernadelung mit dem Gewebe verbunden sein.

Bei der Bespannung kann es sich jedoch auch um ein Formiersieb, ein Trockensieb ein Transferband oder eine andere Bespannung handeln, die für den Einsatz in einer Maschine zur Herstellung einer Faserstoffbahn geeignet ist.

Es kann vorgesehen sein, dass die durch das endlos gemachte Gewebeband entstehende Bandschlaufe - gegebenenfalls nach Vernadelung mit einer oder mehreren Vlieslagen bzw. nach Anbringen anderer geeigneter Funktionslagen, direkt als Bandschlaufe auf die Maschine aufgezogen und verwendet wird. In einer solchen Ausführung stellt die Verbindungszone eine Art Naht der Bespannung dar.

Alternativ kann aber vorgesehen sein, dass die Bandschlaufe beispielsweise in einem Nahtfilz zum Einsatz kommt. In diesem Fall kann vorgesehen sein, dass die Länge des Gewebebandes der ca. doppelten Länge der späteren Bespannung entspricht. Durch Aufeinanderablegen der Gewebeschlaufe entsteht ein doppellagiges Gebilde, das zwei Faltstellen aufweist. Vorteilhafterweise ist die Verbindungszone so platziert, dass sie einen gewissen Abstand, beispielsweise mindestens 5 cm oder mindestens 10cm von den Faltstellen besitzt. Dieses doppellagige Gebilde kann alleine oder gegebenenfalls zusammen mit weiteren Lage, insbesondere Gewebelagen, die Grundstruktur für einen Filz bilden. Üblicherweise kann sie noch mit einer oder mehreren Vlieslagen versehen werden, die z.B. mit der Grundstruktur vernadelt sind. Bei einer derartigen Bespannung können aus den beiden Faltstellen Nahtschlaufen gebildet sein. Üblicherweise sind dazu im Bereich der Faltstellen einige Querfäden entfernt. Gegebenenfalls können auch noch einige Querfäden verschoben sein. Diese Nahtschlaufen sind zusammengeführt. Durch Verbindung mittels eines sogenannten Pintles kann die Bespannung endlos gemacht sein.
Je nachdem, wie das Falten des Gewebebandes erfolgt, können die Nahtschlaufen entweder senkrecht stehen, also in einer Ebene mit der Dickenrichtung und der Längsfrichtung der Bespannung verlaufen.
Sie können aber auch geneigt stehen, und mit dieser Ebenen einen Winkel einschließen. Die kann beispielsweise dadurch realisiert sein, dass beim Falten die Längsfäden nicht exakt aufeinander abgelegt werden.
Bei einem solchen Nahtfilz stellt die Verbindungszone also keine Naht der Bespannung dar. Man spricht hiervon einem sogenannten "Join".

Bespannungen werden bei Ihrer Verwendung oft gespannt, um einen sicheren Betrieb zu gewährleisten. Dadurch sind diese Bespannungen einer Zugbelastung ausgesetzt. Diese Zugbelastung kann dadurch noch erhöht werden, dass die Bespannung im Betrieb über feststehende Elemente gezogen wird.

Insbesondere Pressfilze sind beim Betrieb in Papiermaschinen hohen Zugbelastungen ausgesetzt.
In vorteilhaften Ausführungen der Erfindung kann daher vorgesehen sein, dass die Bespannung, speziell der Pressfilz eine Höchstzugkraft von mehr als 25 kN/m, insbesondere mehr als 30 kN/m, bevorzugt mehr als 35 kN/m insbesondere mehr als 40 kN/m aufweist. Häufig ist die Verbindungszone, also die Naht bzw. der Join hierbei eine Schwachstelle. Durch die Verbindung mittels Transmissionsschweissen gemäß einem der Aspekte dieser Erfindung können Bespannungen einfach hergestellt werden, welche den Zugbelastungen beim Betrieb auch dauerhaft, das heißt während der Einsatzdauer der Bespannung widerstehen.
Die Einsatzdauer einer Bespannung kann üblicherweise zwischen einer Woche und sechs Wochen, speziell zwischen drei und vier Wochen betragen.

### Beispiele:

Exemplarisch werden im Folgenden einige mögliche Realisierungen der Verbindung gemäß eines Aspektes der Erfindung näher beschrieben. Die Erfindung ist jedoch nicht auf die angegebenen Parameterbereiche beschränkt.
Zum Erstellen der Schweißverbindung wurde in den Beispiel ein Laser mit Rollenoptik verwendet, welcher mit einem gewissen Fügedruck auf das Gewebe und die Verbindungselementen gedrückt wurde.
Als Verbindungselement kamen Fäden zum Einsatz, die mit Ruß eingefärbt worden waren.
Weitere Details waren:

**Tabelle 1: Beispiele**

| | Beispiel 1 | Beispiel 2 | Vorteilhaft |
|---|---|---|---|
| Wellenlänge (Laser) | 840 nm | 840 nm | 780nm - 1100nm |
| Durchmesser Rollenoptik | 15 mm | 15 mm | 10mm - 20mm |
| Breite Rollenoptik | 30 mm | 30 mm | 10mm - 50mm |
| Füge-Kraft | 20N | 5N | 2 N - 100 N |
| Laserleistung | 150W | 200W | 50W - 300W, insbes. 100W-200W |

Im Folgenden wird die Erfindung anhand schematischer, nicht maßstäblicher Figuren näher erläutert.
Figur 1a und 1b zeigt die Verbindung zweier längsseitige Enden gemäß einem Aspekt der Erfindung.
Figur 2a und 2b zeigt die Verbindung zweier längsseitige Enden gemäß einem weiteren Aspekt der Erfindung.
Figur 3a und 3b zeigt die Verbindung zweier längsseitige Enden gemäß einem weiteren Aspekt der Erfindung.
Figur 4a und 4b zeigt die Verbindung zweier längsseitige Enden gemäß einem weiteren Aspekt der Erfindung.
Figur 5a und 5b zeigt die Verbindung zweier längsseitige Enden gemäß einem weiteren Aspekt der Erfindung.
Figur 6a und 6b zeigt die Verbindung zweier längsseitige Enden gemäß einem weiteren Aspekt der Erfindung.
Figur 7a und 7b zeigt die Verbindung zweier längsseitige Enden gemäß einem anderen Aspekt der Erfindung.
Figur 8a und 8b zeigt die Verbindung zweier längsseitige Enden gemäß einem anderen Aspekt der Erfindung.
Figur 9a und 9b zeigt die Verbindung zweier längsseitige Enden gemäß einem anderen Aspekt der Erfindung.
Figur 10 zeigt eine Bespannung gemäß einem Aspekt der Erfindung.
Figuren 10a und 10b zeigen mögliche Ausführungen der Nahtschlaufen gemäß einem weiteren Aspekt der Erfindung.
Figuren 11 und 12 zeigen exemplarisch Schweißverbindungen gemäß einem Aspekt der Erfindung.
Figur 13a und 13b zeigen eine Schweißverindung, die mittels Ultraschallschweißen hergestellt wurde.

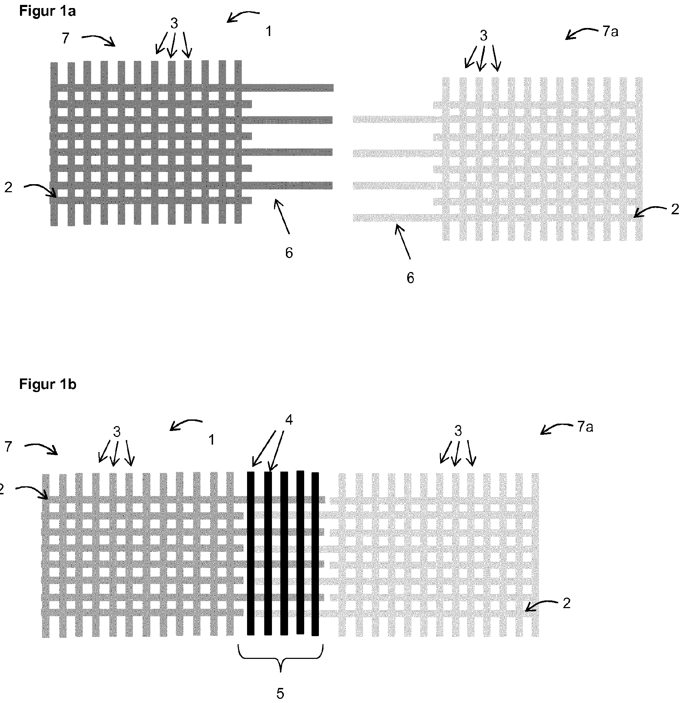

Figur 1a zeigt die zwei längsseitige Enden 7, 7a eines Gewebebandes 1. Das Gewebeband 1 ist dabei aus Längsfäden 2 und Querfäden 3 gebildet. An beiden längsseitigen Enden 7, 7a sind durch Entfernen einiger Querfäden 3 freie Enden 6 der Längsfäden 2 vorgesehen. Die Länge dieser freien Enden umfasst in der in Figur 1a gezeigten Ausführungen 5 Querfäden. Es können aber auch längere oder kürzere freie Enden 6 vorgesehen sein. Bei der in Figur 1a gezeigten Ausführung sind an jedem längsseitigen Ende 7, 7a die freien Enden 6 der Längsfäden 2 unterschiedlich lang. Hierbei wurde von jedem zweiten Längsfaden 2 das freie Ende 6 entfernt, während das jeweils andere freie Ende 6 in voller Länge belassen wurde.

Figur 1b zeigt nun, wie diese freien Enden 6 der Längsfäden 2 im Bereich der Verbindungszone 5 ineinandergreifen. Die Fadendichte der Längsfäden 3 ist hier in der Verbindungszone 5 im Wesentlichen genauso hoch, wie im übrigen Gewebeband In der Verbindungszone sind in Figur 1b mehrere Verbindungselemente 4 in Form von Fäden 4 vorgesehen, die in Querrichtung des Gewebebandes 1 orientiert sind. In Figur 1b sind mit fünf Fäden genauso viele Verbindungselemente 4 vorgesehen, wie vorher als Querfäden 3 entfernt worden sind. Dies muss aber nicht so sein. Es können auch mehr oder weniger Verbindungselemente vorgesehen sein. In besonders vorteilhaften Ausführungen können ein oder zwei fadenförmige Verbindungselemente 4 sein.
Man sieht, dass die Verbindungselemente 4 nur mit einem Teil der Längsfäden 3, in diesem Fall mit der Hälfte der Längsfäden 3 jedes längsseitigen Endes 7, 7a , in Kontakt steht und verschweißt ist.

In Figur 1b sind die Verbindungselemente 4 an einer Seite des Gewebebandes 1 vorgesehen. Sie können aber auch an verschiedenen Seiten des Gewebebandes 1 vorgesehen sein.
Die Verbindungselemente 4 Verbindungselement zumindest an ihrer Oberfläche ein Material aufweisen, welches Licht aus einem Wellenlängenbereich zwischen 780nm und 1100nm, insbesondere zwischen 800nm und 1000nm absorbiert.
Jedes Verbindungselement ist hier mit freien Ende 6 von beiden längsseitigen Enden 7, 7a mittels Transmissionsschweißen, insbesondere Lasertransmissionsschweißen verbunden. Dadurch sind die beiden längsseitigen Enden 7, 7a des Gewebebandes miteinander verbunden und formen eine endlose Schlaufe. Die Kraftübertragung erfolgt hierbei nur über die Verbindungselemente 4. In vorteilhaften Ausführungen.

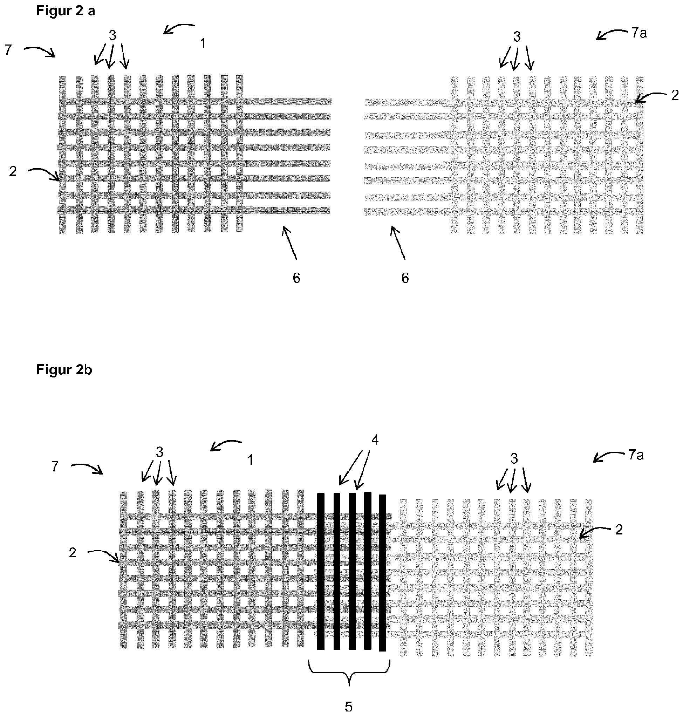

Die in den Figuren 2a und 2b dargestellte Ausführung der Erfindung unterscheidet sich von der Ausführung in Figur 1a und 1b lediglich dadurch, dass keines der freien Enden 6 entfernt oder gekürzt worden ist. Alle freien Enden 6 an beiden längsseitigen Enden 7, 7a haben dieselbe Länge. Wie in Figur 2b gut zu erkennen, ist die Fadendichte der Längsfäden 2 im Bereich der Verbindungszone 5 deutlich größer, als im übrigen Gewebeband 1, nämlich in etwa doppelt so hoch. Durch eine derartige Verbindung kann die Festigkeit der Verbindungzone 5 gesteigert werden, da die Anzahl der Berührstellen zwischen den Verbindungselementen 4 und den freien Enden 6 steigt. Jedoch wird sich durch die höhere Fadendichte die Permeabilität der Verbindungszone gegenüber dem übrigen Gewebeband reduzieren.

In vielen Anwendungen ist es wünschenswert, dass die Permeabilität der Verbindungszone 5 um nicht mehr als 30% von der Permeabilität des übrigen Gewebebandes abweicht.

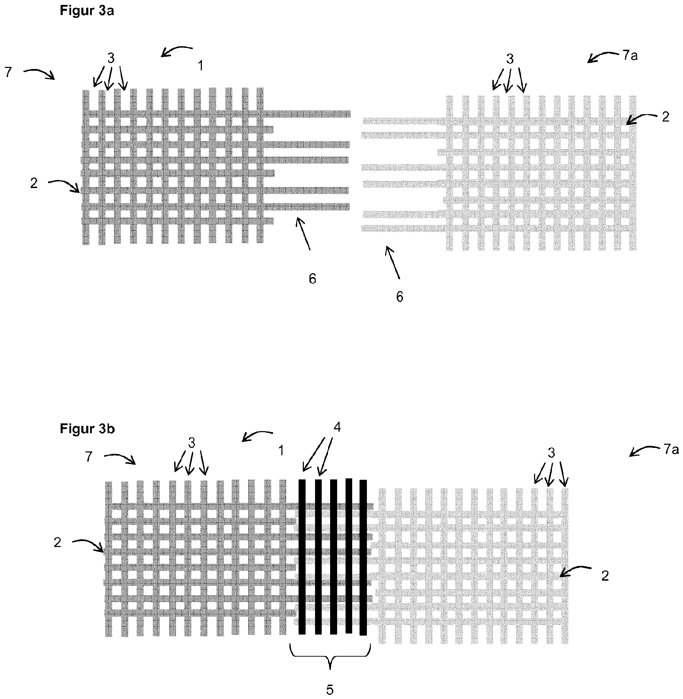

Während die Verbindungszone 5 in einer Ausführung gemäß Figur 1a&1b eine Art optimale Permeabilität aufweist (gleiche Fadendichte wie im übrigen Gewebeband 1) weit die Verbindungszone 5 in Figur 2a&2b eine in gewissem Sinn optimale Festigkeit auf, allerdings bei einer sehr geringen Permeabilität. Durch eine geeignete Anpassung der Längen der freien Enden kann auf einfache Art ein in gewisser Weise optimaler Kompromiss zwischen Festigkeit und Permeabilität erzielt werden.
Ein möglicherweise besser geeigneter Mittelweg ist in den Figuren 3a & 3b gezeigt. Hier wurde jedes dritte freie Ende 6 jedes längsseitigen Endes 7, 7a gekürzt, speziell entfernt. Somit liegen sowohl die Anzahl der Berührpunkte mit den Verbindungselementen 4 als auch die Längsfadendichte in der Verbindungszone 5, und damit die Permeabilität der Verbindungszone 5 zwischen denen der Figuren 1a&1b sowie 2a&2b.
Die in den Figuren 1 a/b, 2 a/b und 3 a/b gezeigten Ausführungen sollen beispielhaft die vielfältigen Möglichkeiten andeuten, die sich durch das selektive Kürzen freier Enden ergeben. Der Fachmann kann hieraus ohne weiteres zu einer Vielzahl weiterer Ausführungen gelangen, bei denen die Längsfadendichte zwischen den in Figur 1a/b bzw. Figur 2a/b gezeigten Ausführungen liegt.

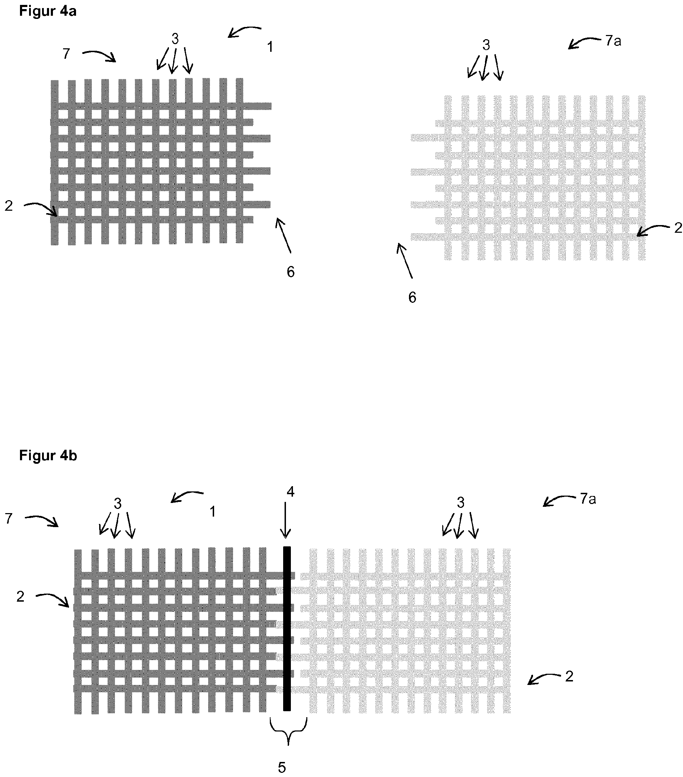

Die Figuren 4a & 4b zeigen eine Variante der in Figuren 1a&1b gezeigten Ausführung. Diese umfasst lediglich ein einzelnes Verbindungselement 4, insbesondre einen Faden 4 oder ein Bändchen 4. Da es sich hierbei um eine besonders bevorzugte Ausführung handelt, soll sie noch einmal explizit hier aufgeführt werden.

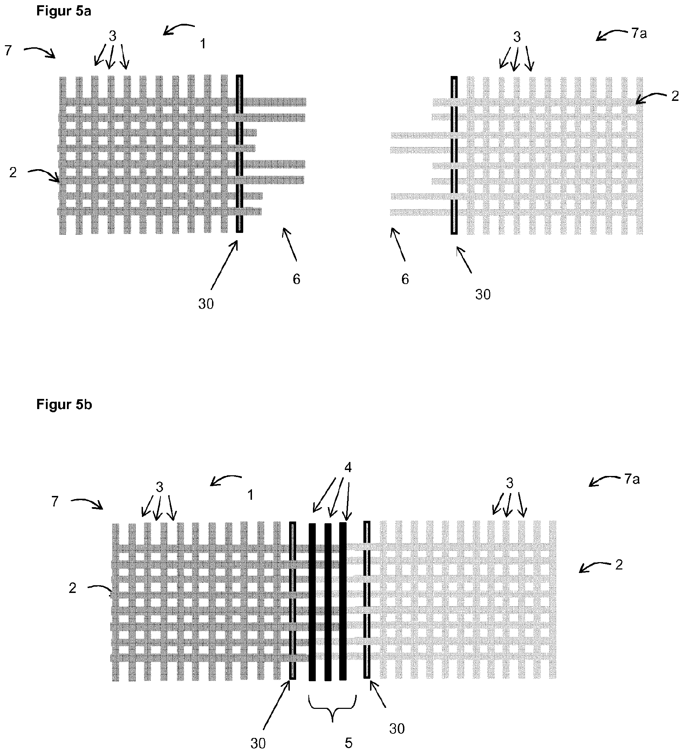

In Figur 5a ist eine Ausführung gezeigt, bei der jeweils zwei benachbarte freie Enden 6 gekürzt sind, während die darauf folgenden beiden benachbarten freien Enden ungekürzt sind. Die so entstehende Verbindung weist sehr ähnliche Eigenschaften aus, wie die in den Figuren 1a und 1b beschriebene. Wie in Figur 5b zu sehen, ist hier die Verbindungszone 5 mittels 3 Verbindungselementen 4 realisiert. Bei der Verwendung von Fäden 4 als Verbindungselemente 4 kann die Verwendung von drei Elementen 4 herstellungstechnisch vorteilhaft sein, da beispielsweise mittels eines Linienlasers das gleichzeitige Verschweißen aller Verbindungselemente in einem einzigen Arbeitsschritt möglich ist.
In der in den Figuren 5a und 5b gezeigten Ausführungen ist zudem exemplarisch auch noch die Möglichkeit dargestellt, dass außerhalb der Verbindungszone 5 ein oder mehrere absorbierende Querfäden 30 im Gewebeband vorgesehen sein können. Häufig werden diese absorbierenden Querfäden 30 direkt bei der Herstellung als Schussfäden in das Gewebeband eingewebt.
Die absorbierenden Querfäden 30 können mit allen oder einigen der Längsfäden 2 verschweißt sein - vorzugsweise mit demselben Schweißverfahren, wie die Verbindungselemente 5. Diese absorbierenden Querfäden 30 dienen beispielsweise der Verhinderung von Laufmaschen im Gewebeband 1. Falls es im Bereich der Verbindungszone 5 zu einem Defekt kommt, soll dieser sich nicht über das gesamte Gewebeband ausbreiten. Vorteilhaft ist daher, diese absorbierenden Querfäden 30 in der Nähe der Verbindungszone, speziell als erste Querfäden nach der Verbindungszone vorzusehen. Alternativ und/oder zusätzlich können verschweißte Fäden auch an anderen Stellen des Gewebebandes vorgesehen bzw. eingewoben sein.
Derartige absorbierenden Querfäden 30 können bei Bedarf in allen Ausführungsformen der Erfindung, insbesondere auch in den in den Figuren 1a/b, 2a/b, 3 a/b oder 4a/b gezeigten Ausführungen eingesetzt werden.
Dabei kann, wie in den Figuren 5a/b gezeigt, an jedem längsseitigen Ende ein einzelner absorbierender Querfaden 30 vorgesehen sein. Es können aber auch mehrere absorbierende Querfäden 30 vorgesehen sein.

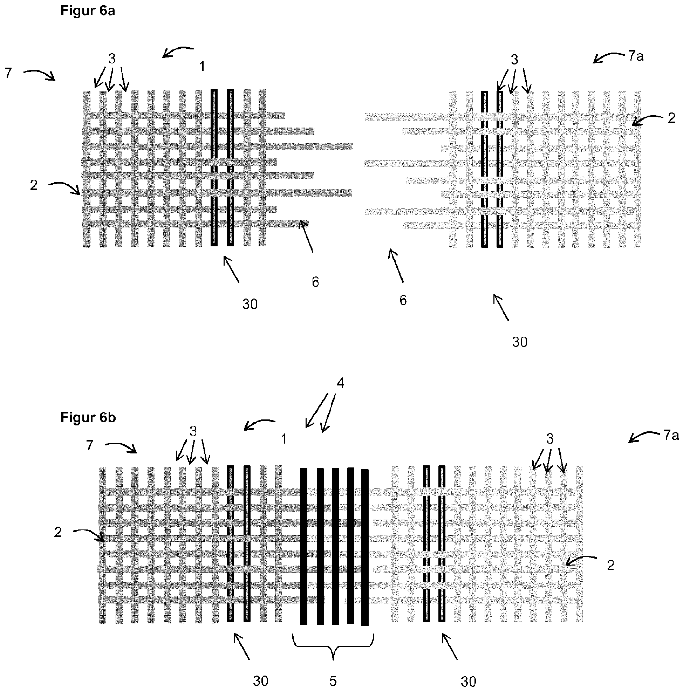

In den Figuren 6a und 6b ist exemplarisch dargestellt, dass die freien Enden 6 jeder längsseitigen Endes 7, 7a nicht nur zwei, sondern auch mehr verschiedenen Längen aufweisen können. In diesen Figuren ist ein Beispiel mit drei unterschiedlichen Längen gezeigt, es sind aber auch 4 oder mehr unterschiedliche Längen möglich. Die Längen sind in den Figuren 6a/6b so gewählt, dass die Längsfadendichte im Bereich der Verbindungszone 5 gleich oder weitgehend gleich ist, wie außerhalb der Verbindungszone. Diese Längsfadendichte kann aber auch, durch entsprechende Anpassung der Längen der freien Enden 6 größer oder kleiner gewählt werden. Zudem ist jedes längsseitige Ende 7, 7a in den Figuren 6a/b mit absorbierenden Querfäden 30 ausgeführt. Diese sind in das Gewebeband eingewebt und werden mit ihm verschweißt. Die absorbierenden Querfäden 30 müssen nicht als erste Querfäden nach der Verbindungzone 5 vorgesehen sein. In diesem Beispiel sind sie jeweils als dritter und vierter Querfaden vorgesehen. Es sind jedoch auch andere Positionierungen möglich.

In der Beschreibung der folgenden Figuren werden Verbindungselemente als eingewoben bezeichnet. Darunter soll aber stets auch die Möglichkeit eingeschlossen sein, dass diese Verbindungselemente vernäht statt verwoben sein können.
Bei den eingewobenen Verbindungselementen 4 wird es sich häufig um geeignete Fäden handeln. Jedoch können auch Bändchen oder Ähnliches als eingewobene Verbindungselemente 4 zum Einsatz kommen.

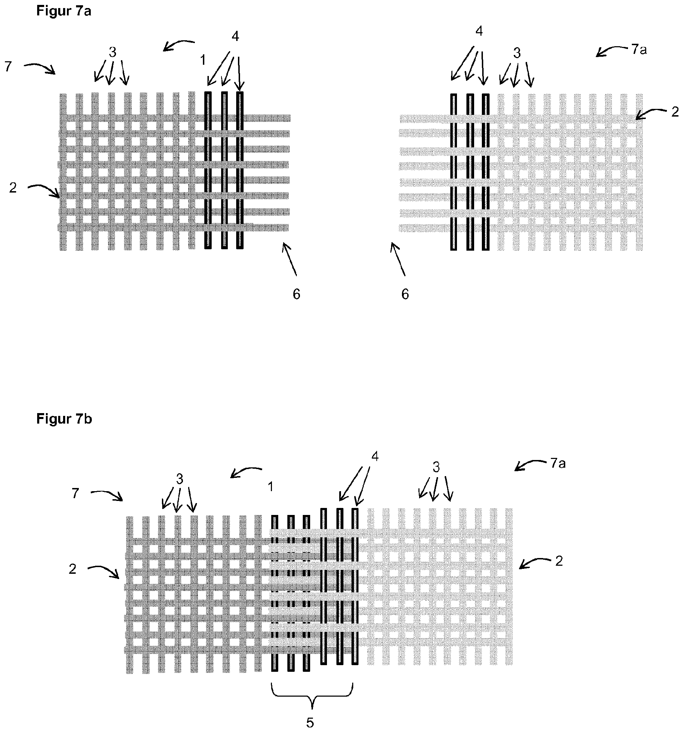

Figuren 7a/7b zeigen eine Ausführung der Erfindung, bei der die Verbindungselemente 4 in das Gewebeband eingewoben sind.
Figur 7a zeigt die zwei längsseitige Enden 7, 7a eines Gewebebandes 1. Das Gewebeband 1 ist dabei aus Längsfäden 2 und Querfäden 3 gebildet. Einige der Querfäden sind als Verbindungselemente 4 ausgeführt. Sie sind als absorbierende Fäden ausgeführt, die zumindest teilweise das für das zum Schweissen verwendete Laserlicht absorbieren. An beiden längsseitigen Enden 7, 7a sind durch Entfernen einiger Querfäden 3 freie Enden 6 der Längsfäden 2 vorgesehen. Die Länge dieser freien Enden umfasst in der in Figur 7a gezeigten Ausführungen 3 Querfäden. Es können aber auch längere oder kürzere freie Enden 6 vorgesehen sein. Bei der in
Figur 7a gezeigten Ausführung sind an jedem längsseitigen Ende 7, 7a die freien Enden 6 der Längsfäden 2 gleich lang.
Bei der Ausführung gemäß Figur 7a sind an beiden längsseitigen Enden 7,7a Verbindungselemente 4 eingewebt.

Figur 7b zeigt nun, wie diese freien Enden 6 der Längsfäden 2 im Bereich der Verbindungszone 5 ineinandergreifen. Die beiden längsseitigen Enden 7, 7a sind so aufeinander positioniert, dass die freien Enden 6 der Längsfäden 2 eines längsseitigen Endes 7, 7a mit zumindest einigen der eingewebten Verbindungselemente 4 des anderen längsseitigen Endes 7, 7a in Kontakt stehen und verschweißt sind. Es kann dabei auch vorgesehen sein, dass die Verbindungselemente 4 mit den Längsfäden mit denen sie verwoben sind, an den Kontaktstellen auch noch verschweißt sind. Dies kann vorteilhaft sein, ist aber nicht zwingend notwendig.

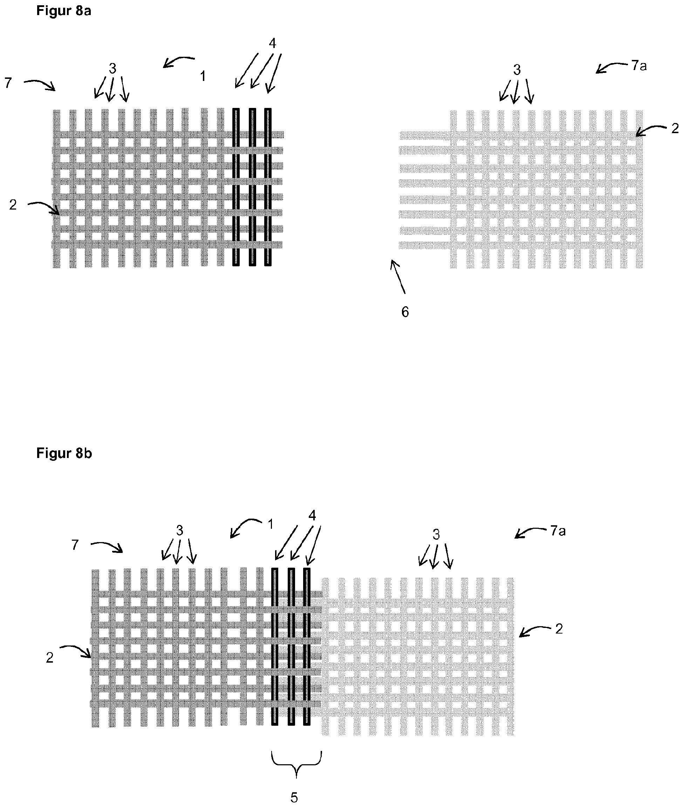

Im Gegensatz zu Figur 7a/7b weist die in Figur 8a/8b gezeigte Ausführung lediglich an einem längsseitigen Ende 7 eingewobene Verbindungselemente 4 auf. An diesem längsseitigen Ende 7 müssen nicht unbedingt freie Enden 6 der Längsfäden 2 vorgesehen sein. Das andere längsseitige Ende 7a weist hingegen freie Enden 6 6 der Längsfäden 2 der Längsfäden auf.
Wie in Figur 8b gezeigt, werden die längsseitigen Enden 7, 7a sind so aufeinander positioniert, dass die freien Enden 6 der Längsfäden 2 des einen längsseitigen Endes 7a mit zumindest einigen der eingewebten Verbindungselemente 4 des anderen längsseitigen Endes 7 in Kontakt stehen und verschweißt sind. Die Breite der Verbindungszone entspricht daher in etwa der Breite des Bereich, in dem in dem einen längsseitigen Ende 7 Verbindungselemente eingewoben sind.

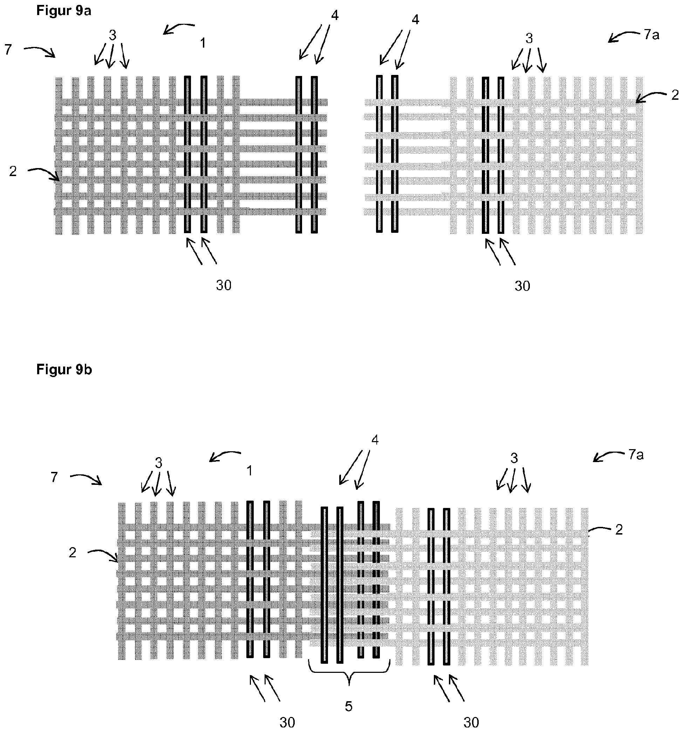

Dem Fachmann ist ohne Weiteres klar, dass auch bei Ausführungen der Erfindung, bei denen alle oder einige der Verbindungselemente 4 in das Gewebeband 1 eingewebt sind, eine Vielzahl von Variationen möglich ist. Die Figuren 9a/9b zeigen exemplarisch eine weitere davon. Hier sind an beiden längsseitigen Enden 7, 7a jeweils am äußeren Ende eingewebte Verbindungselemente 4 vorgesehen. Daneben wurden einige Querfäden 3 entfernt. Vorteilhafterweise werden in einem Bereich Querfäden entfernt, der in etwa der Breite der an dem anderen längseitigen Ende 7, 7a eingewobenen Verbindungselemente entspricht.
Die beiden längsseitigen Enden 7, 7a werden so übereinander angeordnet, dass die eingewebten Verbindungselemente 4 des einen längsseitigen Endes 7, 7a in dem Bereich positioniert sind, in dem am anderen längsseitigen Ende 7, 7a Querfäden 3 entfernt worden sind. Wieder können die beiden Enden7, 7a durch Transmissionsschweißen miteinander verbunden werden.
Je nach Ausgestaltung ode Webmuster des Gewebenbandes kann es bei Ausführungen der Erfindung, bei denen alle oder einige der Verbindungselemente 4 in das Gewebeband 1 eingewebt sind notwendig sein, dass die Verbindung in zwei Schweißschritten -einmal von oben und einmal von unten- erfolgt.
Wie dem Fachmann wiederum klar ist, können auch bei verwobenen Verbindungselementen zusätzlich wieder außerhalb der Verbindungszone 5 absorbierende Querfäden 30 vorgesehen sein. In Figur 9a/9b sind solche examplarisch gezeigt. Solche absorbierenden Querfäden können aber in allen Ausführungen der Erfindung vorgesehen sein.

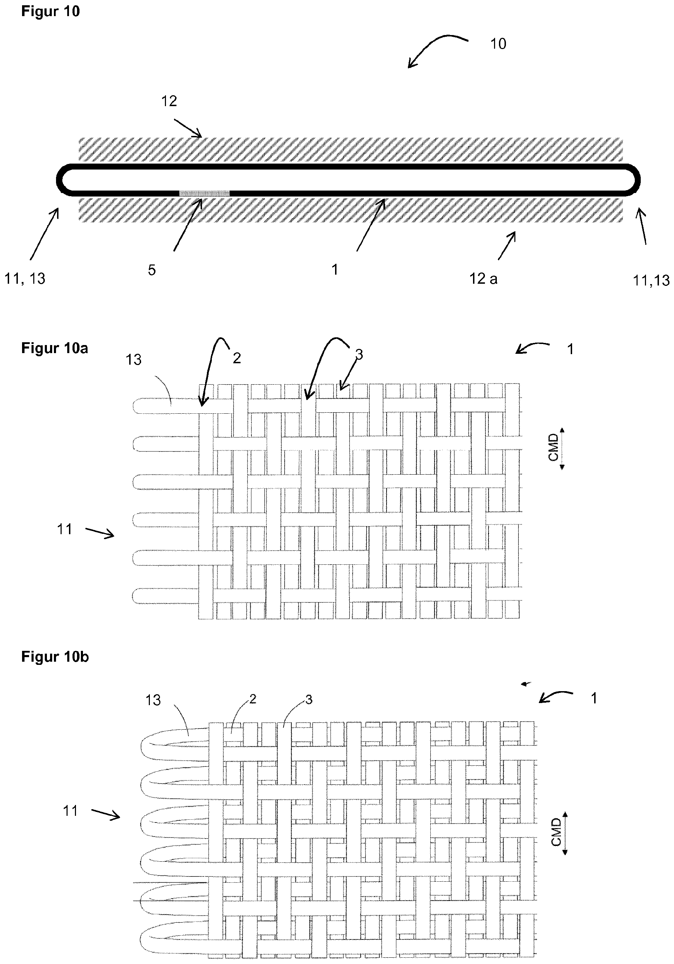

Figur 10 zeigt schematisch eine Bespannung 10, speziell einen Nahtfilz 10 gemäß einem Aspekt der Erfindung. Das Gewebeband 1 mit der Verbindungszone 5 liegt in Form einer endlosen Schlaufe vor. Durch Aufeinanderablegen der Gewebeschlaufe ist ein doppellagiges Gebilde entstanden, das zwei Faltstellen 11 aufweist. Das aus dem endlos gemachten Gewebeband 1 entstandene, doppellagige Gebilde dient als Grundstruktur für den Nahtfilzt 10. Wie in Figur 10 gezeigt, kann es auf der Oberseite und auch auf der Unterseite jeweils mit einer Vlieslage 12, 12a versehen sein. Diese ist üblicherweise durch Vernadeln mit der Grundstruktur verbunden. In vorteilhaften Ausführungen der Erfindung beträgt auch nach dem Vernadeln die Festigkeit der Verbindungszone 5 zumindest 25%, insbesondere zumindest 50% der Festigkeit der Festigkeit des übrigen Gewebebands 1. Wie bereits weiter oben beschrieben, kann es vorteilhaft sein, die Verbindungszone 5 in einigem Abstand von den Faltstellen 11 anzuordnen. So ist ein Abstand von mindestens 5cm, oder auch 10cm sehr vorteilhaft. Bevorzugt kann man die Verbindungszone 5 auch in etwa in der Mitte zwischen den beiden Faltstellen anordnen. Aus den beiden Faltstellen 11 werden die Nahtschlaufen 13 gebildet sein. Üblicherweise sind dazu im Bereich der Faltstellen 11 einige Querfäden 3 entfernt. Diese Nahtschlaufen 13 werden zusammengeführt. Durch Verbindung mittels eines sogenannten Pintles kann die Bespannung 10 endlos gemacht sein. Die Verbindungszone 5 in einem derartigen Nahtfilz kann nach jeder beliebigen Ausführung der Erfindung ausgeführt sein. Besonders vorteilhaft kann die Verbindungszone 5 jedoch nach einer der in den Figuren 1a/b bis 9a/b gezeigten Varianten ausgeführt sein.

Die Figuren 10a und 10b zeigen einen Ausschnitt um eine Faltstelle 11 bei einer Bespannung 20, wie in Figur 10 dargestellt. Figur 10a zeigt eine Variante, bei der beim Falten die Längsfäden 2 direkt übereinander abgelegt sind. Die Nahtschlaufen 13 stehen hier also senkrecht, das heißt in einer Ebene mit der Dickenrichtung und der Längsrichtung der Bespannung 10 verlaufen.
In anderen Ausführungen können die Nahtschlaufen 13 aber auch geneigt stehen, und mit dieser Ebene einen Winkel einschließen. Eine solche Ausführung ist in Figur 10b gezeigt. Dies kann beispielsweise dadurch realisiert sein, dass beim Falten die Längsfäden 2 nicht exakt aufeinander abgelegt werden.

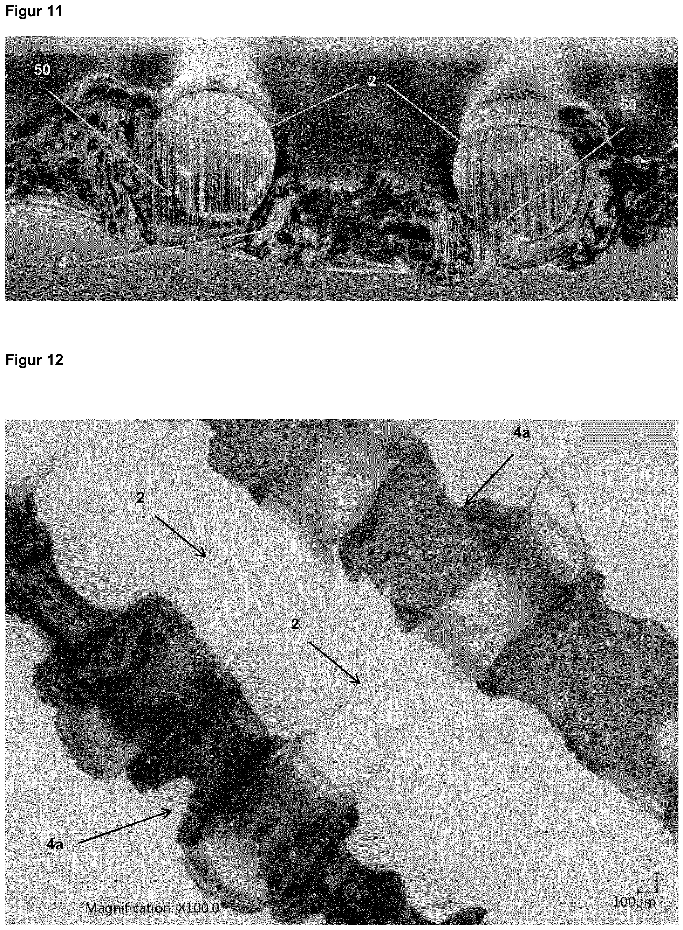

Figur 11 zeigt exemplarisch in einer Schnittansicht zwei Längsfäden 2, die durch ein Verbindungselement 5 miteinander verbunden sind. Die beiden Längsfäden 2 können dabei beispielsweise aus den freien Enden 6 zweier längsseitiger Enden 7, 7a stammen. Die Längsfäden sind als der transparente Fügepartner ausgeführt. Das Verbindungselement 4 ist hier als Faden ausgeührt. Dieser Faden ist der absorbierende Fügepartner für das Transmissionsschweißen. Das kann beispielsweise durch die Zugabe von Ruß oder eines anderen geeigneten Absorbermaterials zu dem Polymermaterial des Fadens realisiert sein.
Das Verbindungselement 4 ist mit den beiden Längsfäden 2 an Schweißstellen 50 verbunden. Dabei wird in Figur 11 sehr gut der Vorteil des Transmissionsschweißens deutlich. Das Verbindungselement 4 kann beim Verschweißen deformiert werden. Durch die entstehende Hitze kann der Faden 4 beispielsweise teilweise schmelzen. Durch den üblicherweise angelegten Fügedruck wird dann auch die Form des Verbindungselements verändert werden. Demgegenüber bleiben die Längsfäden 2 in ihrer Struktur weitgehend erhalten. Insbesondere wird dadurch auch die Zugfestigkeit der Längsfäden 2 nicht, oder nur wenig verändert.

In Figur 12 ist ein Teil aus einer Verbindungszone 5 in der Draufsicht gezeigt. wieder transparente Längsfäden 2 dargestellt. Diese sind mittels zwei Verbindungselementen 4a, 4b miteinander verbunden. Die Verbindungselement 4a, 4b sind als zwei Fäden ausgeführt, die im Wesentlichen in Querrichtung verlaufen und mittels Transmissionsschweißen - hier speziell mittels Lasertransmissionsschweißen - mit den Längsfäden verschweißt sind. Hierbei ist das eine Verbindungselement 4a mittels Ruß eingefärbt, während das andere Verbindungselement 4b mittels Graphit eingefärbt ist, um es für das verwendete Laserlicht absorbierend zu machen. Beide Verbindungselemente 4a, 4b sind hier unterhalb der Längsfäden 2 angeordnet. Der Schweißvorgang kann hier also für beide Verbindungselemente 4a, 4b von derselben Seite erfolgen. In dem in Figur 12 gezeigten Beispiel wurde Laserlicht, das in einem Wellenlängenbereich zwischen 780nm und 1100nm lag, von oben ausgesendet. Es durchdrang die für dieses Licht transparent ausgeführten Längsfäden 2, und wurde von den Verbindungselementen 4a, 4b absorbiert, welche sich dadurch aufheizten.

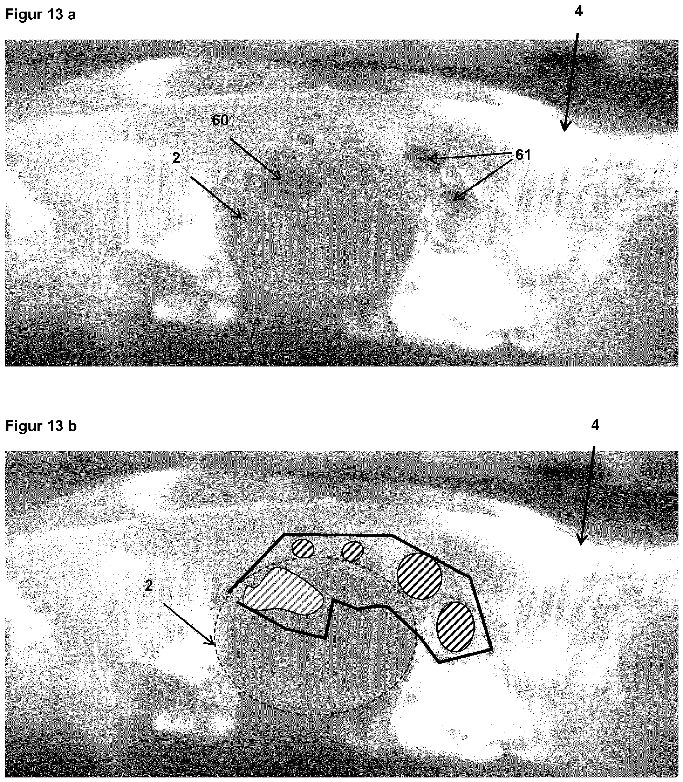

Um die Unterschiede zum Stand der Technik, sowie Vorteile der Erfindung zu verdeutlichen, sind in den Figuren 13a und 13b ein Längsfaden 2 gezeigt der mit einem Verbindungselement 4 mittels Ultraschall-Schweißens verschweißt wurde. Hierbei ist deutlich zu erkennen, dass durch das Verschweißen Blasen 60, 61 entstehen, die das Material und die Verbindung schwächen. Dabei weist sowohl das Verbindungselement Blasen 61 auf, als auch der Längsfaden 60. Im Gegensatz zu einer Verbindung gemäß einem Aspekt der Erfindung wird dadurch auch der Längsfaden 2 strukturell verändert und damit geschwächt. Figur 13b entspricht Figur 13a, jedoch wurden hier der besseren Verdeutlichung halber die Zone mit durch das Schweißen veränderter Materialstruktur (dicke schwarze Linie) sowie die darin befindlichen Blasen 60, 61 grafisch hervorgehoben. Durch die beim Schweißen eingebrachte Energie ist wird eine deutlich erkennbare Veränderung der Materialstruktur sowohl des Verbindungselements 4 als auch des Längsfadens 2 hervorgerufen. Die Figuren 13a und 13b zeigen damit nicht nur einen der Vorteile der Erfindung. Ein Vergleich der Figuren 11 und 13a/b macht auch deutlich, dass sich mittels Transmissionsschweißens hergestellte Verbindungen auch in der fertigen Bespannung sehr gut von anderen Schweißverbindungen unterscheiden lassen. Dieser Nachweis kann, wie in den Figuren gezeigt, sehr einfach mittels einer lichtmikroskopischen Betrachtung der Verbindungsstellen geschehen.

Im Rahmen einer weiteren erfinderischen Idee sei darauf hingewiesen, dass die im bisherigen Verlauf dieser Anwendung beschriebenen Designmöglichkeiten der Verbindungszone, insbesondere -aber nicht ausschließlich- die in den Figuren 1a/b bis 9 a/b gezeigten Designs auch in Kombination mit anderen Fügeverfahren als dem Transmissionsschweißen, insbesondere mit dem Ultraschallschweißen oder weiteren Varianten des Laserschweißens mit gewissen Vorteilen eingesetzt werden können.

Als Gewebeband können verschiedenartigste Arten von Geweben verwendet werden. Es kann vorgesehen sein, dass die durch das endlos gemachte Gewebeband entstehende Bandschlaufe - gegebenenfalls nach Vernadelung mit einer oder mehreren Vlieslagen bzw. nach Anbringen anderer geeigneter Funktionslagen, direkt als Bandschlaufe auf die Maschine aufgezogen und verwendet wird. In einer solchen Ausführung stellt die Verbindungszone eine Art Naht der Bespannung dar.

Alternativ kann aber vorgesehen sein, dass die Bandschlaufe beispielsweise wie oben beschrieben in einem Nahtfilz zum Einsatz kommt.

## Patentansprüche

1. Bespannung (10), insbesondere Pressfilz (10) zum Einsatz in einer Maschine zur Herstellung einer Faserstoffbahn, umfassend ein Gewebeband (1) mit miteinander verwobenen Längsfäden (2) und Querfäden (3) sowie mit einem ersten (7) und einem zweiten längsseitigen Ende (7a), wobei die beiden längsseitigen Enden (7, 7a) des Gewebebandes (1) in einer Verbindungszone (5) miteinander verbunden sind, wobei die beiden längsseitigen Enden (7, 7a) mittels Transmissionsschweißen, insbesondere mittels Lasertransmissionsschweißen miteinander verschweißt sind. **dadurch gekennzeichnet, dass** zumindest ein Verbindungselement (4) vorgesehen ist, welches mit zumindest einigen der Längsfäden(2) beider längsseitiger Enden (7, 7a) mittels Transmissionsschweißen, insbesondere mittels Lasertransmissionsschweißen verbunden ist und das zumindest eine Verbindungselement (4) mit dem Gewebeband (1) lediglich durch die Schweißverbindung verbunden ist.

2. Bespannung (10) nach Anspruch 1 **dadurch gekennzeichnet, dass** die Verbindungszone (5) derart ausgebildet ist, dass an zumindest einem, insbesondere beiden längsseitigen Enden (7, 7a) des Gewebebandes (1) ein oder mehrere Querfäden (3) unter Ausbildung freier Enden (6) der Längsfäden (2) entfernt sind und zumindest ein Verbindungselement (4) vorgesehen ist, das mit zumindest einigen der freien Enden (6) beider längsseitigen Enden (7, 7a) mittels Transmissionsschweißen, insbesondere mittels Lasertransmissionsschweißen verschweißt ist, und dass die Kraftübertragung zwischen den beiden längsseitigen Enden lediglich über das bzw. die Verbindungselemente erfolgt.

3. Bespannung (10) nach einem der vorherigen Ansprüche, **dadurch gekennzeichnet, dass** das zumindest eine Verbindungselement (4) zumindest einen Faden oder ein Bändchen umfasst oder daraus besteht, welcher bzw. welches im Wesentlichen in Querrichtung des Gewebebands (1) orientiert ist.

4. Bespannung (10) nach einem der vorherigen Ansprüche, **dadurch gekennzeichnet, dass** mehr als ein Verbindungselement (4), insbesondere zwei, drei oder mehr Verbindungselemente (4) vorgesehen sind.

5. Bespannung (10) nach Anspruch 4, **dadurch gekennzeichnet, dass** sowohl auf einer Oberseite als auch auf einer Unterseite der Verbindungszone (5) Verbindungselemente (4) angeordnet sind oder dass alle Verbindungselemente (4) auf einer Seite der Verbindungszone (5) angeordnet sind.

6. Bespannung (10) nach einem der Ansprüche 2 bis 5, **dadurch gekennzeichnet, dass** die freien Enden (6) der Längsfäden (2) im Bereich der Verbindungszone (5) ineinandergreifen.

7. Bespannung (10) nach einem der Ansprüche 2 bis 6, **dadurch gekennzeichnet, dass** die freien Enden (6) der Längsfäden (2) eines oder beider längsseitigen Enden (7, 7a) unterschiedlich lang sind.

8. Bespannung (10) nach einem der vorherigen Ansprüche, **dadurch gekennzeichnet, dass** in das Gewebeband (1) einer oder mehrere absorbierende Querfäden (3) eingewebt sind, welche zumindest mit einigen der Längsfäden (2) verschweißt sind.

9. Bespannung (10) nach einem der vorherigen Ansprüche, **dadurch gekennzeichnet, dass** zumindest ein Verbindungselement (4) nur mit einem Teil der Längsfäden (2) insbesondere mit weniger als 75% oder weniger als 50% der Längsfäden (2) jedes längsseitigen Endes (7, 7a), in Kontakt steht oder verschweißt ist.

10. Bespannung (10) nach einem der vorherigen Ansprüche, **dadurch gekennzeichnet, dass** das Verbindungselement (4) zumindest an seiner Oberfläche ein Material aufweist, welches Licht aus einem Wellenlängenbereich zwischen 780nm und 1100nm, insbesondere zwischen 800nm und 1000nm absorbiert.

11. Bespannung (10) nach einem der vorherigen Ansprüche, **dadurch gekennzeichnet, dass** die Verbindungszone (5) eine Permeabilität aufweist, die sich um weniger als 30% von der Permeabilität des übrigen Gewebebands (1) unterscheidet

## Claims

1. Clothing (10), in particular a press felt (10) for use in a machine for producing a fibrous web, comprising a woven fabric strip (1) having interwoven longitudinal threads (2) and cross threads (3), as well as having a first (7) and a second (7a) longitudinal end, wherein the two longitudinal ends (7, 7a) of the woven fabric strip (1) are connected to one another in a connection zone (5), wherein the two longitudinal ends (7, 7a) are welded to one another by means of transmission welding, in particular by means of laser transmission welding, **characterized in that** at least one connection element (4) which by means of transmission welding, in particular by means of laser transmission welding, is connected to at least some of the longitudinal threads (2) of both longitudinal ends (7, 7a), is provided, and the at least one connection element (4) is connected to the woven fabric strip (1) only by way of the welded connection.

2. Clothing (10) according to Claim 1, **characterized in that** the connection zone (5) is configured in such a manner that one or a plurality of cross threads (3), while configuring free ends (6) of the longitudinal threads (2), are removed on at least one, in particular both, longitudinal ends (7, 7a) of the woven fabric strip (1), and at least one connection element (4) which by means of transmission welding, in particular laser transmission welding, is welded to at least some of the free ends (6) of both longitudinal ends (7, 7a) is provided, and **in that** the force transmission between the two longitudinal ends takes place only by way of the connection element, or connection elements, respectively.

3. Clothing (10) according to one of the preceding claims, **characterized in that** the at least one connection element (4) comprises or is composed of at least one thread or a tape which is oriented substantially in the cross direction of the woven fabric strip (1).

4. Clothing (10) according to one of the preceding claims, **characterized in that** more than one connection element (4), in particular two, three, or more, connection elements (4), are provided.

5. Clothing (10) according to Claim 4, **characterized in that** connection elements (4) are disposed on an upper side as well as on a lower side of the connection zone (5), or **in that** all connection elements (4) are disposed on one side of the connection zone (5).

6. Clothing (10) according to one of Claims 2 to 5, **characterized in that** the free ends (6) of the longitudinal threads (2) engage in one another in the region of the connection zone (5).

7. Clothing (10) according to one of Claims 2 to 6, **characterized in that** the free ends (6) of the longitudinal threads (2) of one or both longitudinal ends (7, 7a) are of dissimilar lengths.

8. Clothing (10) according to one of the preceding claims, **characterized in that** one or a plurality of absorbent cross threads (3) which are welded to at least some of the longitudinal threads (2) are woven into the woven fabric strip (1).

9. Clothing (10) according to one of the preceding claims, **characterized in that** at least one connection element (4) contacts or is welded to only part of the longitudinal threads (2), in particular fewer than 75% or fewer than 50%, of the longitudinal threads (2) of each longitudinal end (7, 7a).

10. Clothing (10) according to one of the preceding claims, **characterized in that** the connection element (4) at least on the surface thereof comprises a material which absorbs light from a wavelength range between 780 nm and 1100 nm, in particular between 800 nm and 1000 nm.

11. Clothing (10) according to one of the preceding claims, **characterized in that** the connection zone (5) has a permeability which differs from the permeability of the remaining woven fabric strip (1) by less than 30%.

## Revendications

1. Habillage (10), notamment feutre de presse (10) destiné à être utilisé dans une machine servant à la fabrication d'une bande de matière fibreuse, comprenant une bande de tissu (1) munie de fils longitudinaux (2) et de fils transversaux (3) entrelacés les uns avec les autres, ainsi que d'une première (7) et d'une deuxième extrémité côté longitudinal (7a), les deux extrémités côté longitudinal (7, 7a) de la bande de tissu (1) étant reliées l'une à l'autre dans une zone de liaison (5), les deux extrémités côté longitudinal (7, 7a) étant soudées l'une à l'autre par soudage par transmission, notamment par soudage par transmission laser, **caractérisé en ce qu'**au moins un élément de liaison (4) est prévu, qui est relié avec au moins certains des fils longitudinaux (2) des deux extrémités côté longitudinal (7, 7a) par soudage par transmission, notamment par soudage par transmission laser, et l'au moins un élément de liaison (4) est relié avec la bande de tissu (1) uniquement par la liaison par soudage.

2. Habillage (10) selon la revendication 1, **caractérisé en ce que** la zone de liaison (5) est configurée de telle sorte qu'un ou plusieurs fils transversaux (3) sont éliminés à au moins une, notamment aux deux extrémités côté longitudinal (7, 7a), de la bande de tissu (1) en formant des extrémités libres (6) des fils longitudinaux (2), et au moins un élément de liaison (4) est prévu, qui est soudé avec au moins certaines des extrémités libres (6) des deux extrémités côté longitudinal (7, 7a) par soudage par transmission, notamment par soudage par transmission laser, et **en ce que** le transfert de force entre les deux extrémités côté longitudinal a lieu uniquement par l'intermédiaire du ou des éléments de liaison.

3. Habillage (10) selon l'une quelconque des revendications précédentes, **caractérisé en ce que** l'au moins un élément de liaison (4) comprend au moins un fil ou une bandelette ou est constitué de celui-ci ou de celle-ci, qui est orienté(e) essentiellement dans la direction transversale de la bande de tissu (1).

4. Habillage (10) selon l'une quelconque des revendications précédentes, **caractérisé en ce que** plus d'un élément de liaison (4), notamment deux, trois ou davantage d'éléments de liaison (4) sont prévus.

5. Habillage (10) selon la revendication 4, **caractérisé en ce que** des éléments de liaison (4) sont agencés aussi bien sur un côté supérieur que sur un côté inférieur de la zone de liaison (5), ou **en ce que** tous les éléments de liaison (4) sont agencés sur un côté de la zone de liaison (5).

6. Habillage (10) selon l'une quelconque des revendications 2 à 5, **caractérisé en ce que** les extrémités libres (6) des fils longitudinaux (2) s'engrènent les unes dans les autres dans la région de la zone de liaison (5).

7. Habillage (10) selon l'une quelconque des revendications 2 à 6, **caractérisé en ce que** les extrémités libres (6) des fils longitudinaux (2) d'une ou des deux extrémités côté longitudinal (7, 7a) sont de différente longueur.

8. Habillage (10) selon l'une quelconque des revendications précédentes, **caractérisé en ce qu'**un ou plusieurs fils transversaux absorbants (3) sont intégrés dans la bande de tissu (1), qui sont soudés au moins avec certains des fils longitudinaux (2).

9. Habillage (10) selon l'une quelconque des revendications précédentes, **caractérisé en ce qu'**au moins un élément de liaison (4) n'est en contact ou n'est soudé qu'avec une partie des fils longitudinaux (2), notamment avec moins de 75 % ou moins de 50 % des fils longitudinaux (2) de chaque extrémité côté longitudinal (7, 7a).

10. Habillage (10) selon l'une quelconque des revendications précédentes, **caractérisé en ce que** l'élément de liaison (4) présente, au moins sur sa surface, un matériau qui absorbe la lumière issue d'une plage de longueurs d'onde comprise entre 780 nm et 1 100 nm, notamment entre 800 nm et 1 000 nm.

11. Habillage (10) selon l'une quelconque des revendications précédentes, **caractérisé en ce que** la zone de liaison (5) présente une perméabilité qui diffère de moins de 30 % de la perméabilité du reste de la bande de tissu (1).
